# EUROPEAN PATENT SPECIFICATION

(11) **EP 4 751 558 B1**
(45) Date of publication and mention of the grant of the patent: **02.12.2026**
(21) Application number: 25157279.8
(22) Date of filing: 12.02.2025
(51) Int. Cl.: A01G 20/47, F04D 25/06, F04D 25/08, F04D 29/02, F04D 29/42, H05F 3/02

(54) **AIRFLOW DEVICE AND BLOWER VACUUM**
LUFTSTROMVORRICHTUNG UND GEBLÄSEVAKUUM
DISPOSITIF D'ÉCOULEMENT D'AIR ET VIDE DE SOUFFLANTE

(30) Priority: 28.11.2024 CN 202411734757
(43) Date of publication of application: 03.06.2026
(73) Proprietor: Nanjing Chervon Industry Co., Ltd., Nanjing, Jiangsu 211106 (CN)
(72) Inventor: YANG, Dezhong, Nanjing, Jiangsu 211106, (CN); QI, Qin, Nanjing, Jiangsu 211106, (CN); GUO, Jianpeng, Nanjing, Jiangsu 211106, (CN)
(74) Representative: Sun, Yiming

(56) References cited:
- CN-U- 208 417 011
- JP-A- 2001 050 196
- US-A1- 2011 113 587
- US-A1- 2019 098 844

## Description

### TECHNICAL FIELD

The present application relates to a power tool and, in particular, to an airflow device and a blower vacuum. Specifically, the present invention relates to an airflow device of a generic type as defined in the generic part of the independent claim attached.

### BACKGROUND

Document US 2019/0098844 A1 discloses an airflow device of the generic type defined above. Specifically, this document discloses a blower having a fan, a motor, an air duct assembly having an air duct passage with an air inlet and an air outlet where the fan rotates to drive the airflow to enter into the air duct passage from the air inlet and to be exposed out of the air outlet, and an electrostatic neutralization apparatus. The electrostatic neutralization apparatus includes a first conductive end and a second conductive end wherein the first conductive end is located within the air duct passage and close to the fan and the second conductive end is also located within the air duct passage.

Further relevant prior art documents are US 2011/113587 A1, JP 2001 050196 A and CN 208 417 011 U.

A blower vacuum in the related art is a common electric outdoor cleaning tool mainly used for cleaning and collecting rubbish such as leaves. The blower vacuum gathers the rubbish such as the leaves by rotating internal fan blades and then sucks the fallen leaves through suction, thereby collecting the fallen leaves.

During the operation of the blower vacuum, static electricity is generated due to the friction between dusts and other particles and the internal fan blades, a housing, and the like. Static charges accumulate on the fan blades and the housing, and there is a probability that these static charges are transferred to electronic components in the blower vacuum. After accumulating to a certain degree, the static charges are prone to break down the electronic components, causing system damage and causing the blower vacuum to malfunction.

This part provides background information related to the present application, and the background information is not necessarily the existing art.

### SUMMARY

In accordance with the present invention, an airflow device is provided as defined in the independent claim attached. Preferred embodiments are defined in dependent claims attached.

### BRIEF DESCRIPTION OF THE DRAWINGS

FIG. 1 is a perspective view of an airflow device according to an example.
FIG. 2 is a side sectional view of the airflow device in FIG. 1.
FIG. 3 is a perspective view of a fan assembly of the airflow device in FIG. 1.
FIG. 4 is a perspective view of a first electrostatic conduction device of the airflow device in FIG. 1.
FIG. 5 is a perspective view of a first electrostatic conduction device of the airflow device in FIG. 1 from another perspective.
FIG. 6 is a perspective view illustrating the connection of a first electrostatic conduction device of the airflow device in FIG. 1.
FIG. 7 is a perspective view of a first electrostatic conduction component of a first electrostatic conduction device of an airflow device according to an example, where the first electrostatic conduction component is formed by a tip.
FIG. 8 is a side view of a fourth electrostatic conduction component included in a first electrostatic conduction device of an airflow device according to an example.
FIG. 9 is a side view illustrating the connection of a second electrostatic conduction device of an airflow device according to an example.
FIG. 10 is a side view illustrating the connection of a third electrostatic conduction device of an airflow device according to an example.
FIG. 11 is a side sectional view illustrating the connection of a third electrostatic conduction device of the airflow device in FIG. 10;
FIG. 12 is a side view of an airflow device in a blowing state in an example;
FIG. 13 is a side sectional view of the airflow device in FIG. 12;
FIG. 14 is a side view of the airflow device in FIG. 12 in a suction state;
FIG. 15 is a perspective view showing that an airflow device in an embodiment according to the invention includes an electrostatic conduction device and a housing assembly;
FIG. 16 is a perspective view from another viewing angle showing that the airflow device in FIG. 15 includes the electrostatic conduction device and the housing assembly;
FIG. 17 is a perspective view showing that the airflow device in FIG. 15 includes the electrostatic conduction device;
FIG. 18 is a perspective view from another viewing angle showing that the airflow device in FIG. 17 includes the electrostatic conduction device;
FIG. 19 is a perspective view showing that an airflow device in an alternative embodiment according to the invention includes an electrostatic conduction device;
FIG. 20 is a perspective view showing that an airflow device in another alternative embodiment according to the invention includes an electrostatic conduction device crossing an air blowing port; and
FIG. 21 is a graph showing the relationship between the linear velocity of a fan assembly of an airflow device in an example and static electricity.

### DETAILED DESCRIPTION

Before any examples of this application and embodiments of the present invention are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

The present application provides an airflow device for generating the airflow to suck up and collect light and thin objects such as fallen leaves. In some examples, the airflow device is a blower vacuum. In some other examples, the airflow device is a garden leaf vacuum.

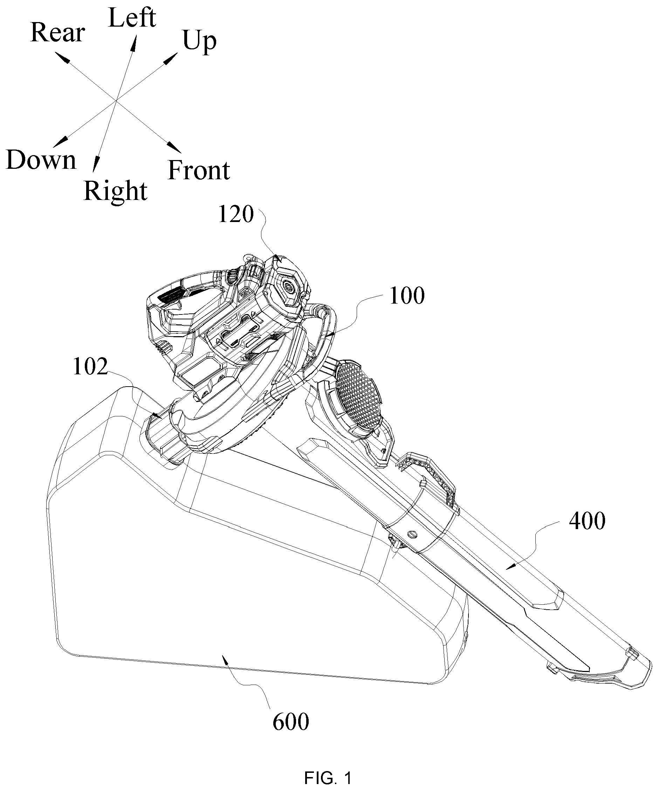

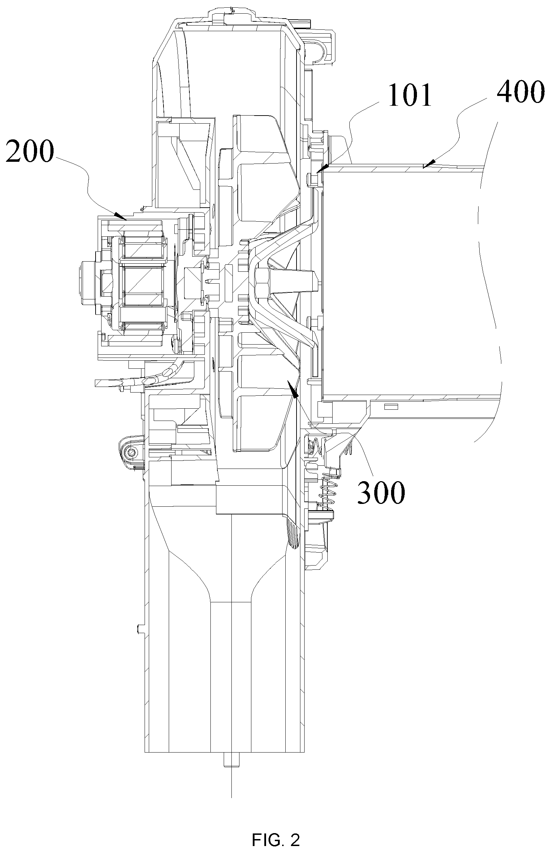

Referring to FIGS. 1 to 3, the airflow device includes a housing assembly 100, an electric motor 200, and a fan assembly 300. The electric motor 200 is disposed in the housing assembly 100. The fan assembly 300 is connected to the electric motor 200. The fan assembly 300 is driven by the electric motor 200 to generate the airflow. The housing assembly 100 has an air suction port 101 and an air blowing port 102. The air suction port 101 is provided corresponding to the fan assembly 300. When the fan assembly 300 is working, the airflow enters from the air suction port 101, passes through the electric motor 200, and then flows out from the air blowing port 102 so that air blowing or air suction can be achieved, and at the same time, the airflow can dissipate heat of the electric motor 200 during the flowing process. As shown in FIG. 1, the airflow device further includes a air suction tube 400 detachably disposed at the air suction port 101, and the other end of the air suction tube 400 which is not connected to the air suction port 101 forms a suction port for sucking up sucked objects. The fan assembly 300 is connected to a motor shaft of the electric motor 200. Driven by the electric motor 200, the motor shaft rotates and synchronously drives the fan assembly 300 to rotate. The rotation of the fan assembly 300 generates negative pressure, thereby providing power for the airflow device to suck up fallen leaves and the like. The air suction tube 400 sucks up sucked objects through negative pressure, and the sucked objects include, but are not limited to, fallen leaves, dust, branches, small stones, and the like.

In some examples, the air suction tube 400 is a hose with a smooth inner wall, and the hose is easy to store. In some specific examples, the air suction tube 400 is a bellows structure, specifically including spiral support strips for support and a soft ventilation material covering the spiral support strips. The soft ventilation material may be the cotton cloth, the plastic cloth, or the like. The use of the soft ventilation material can not only block objects such as fallen leaves in the air suction tube 400 but also play a role in ventilation. The air suction tube 400 with a hose structure may be used for various airflow devices capable of blowing or sucking air, such as a handheld blower, a backpack blower, a blower vacuum, and a vacuum cleaner.

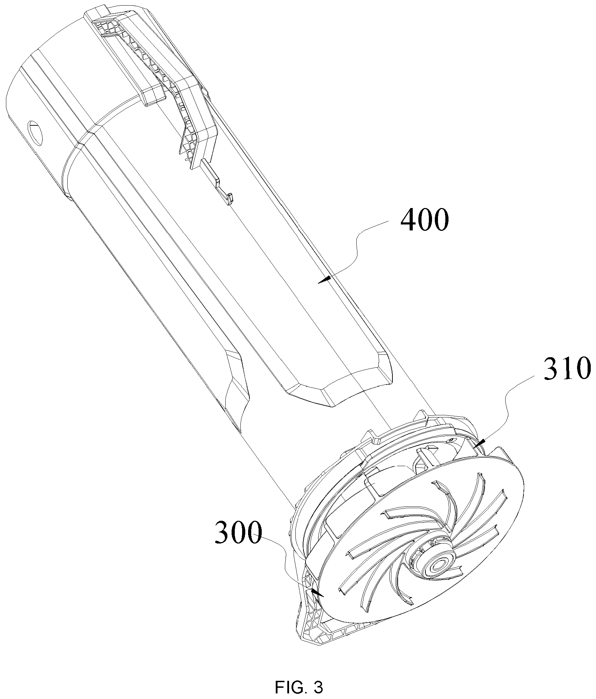

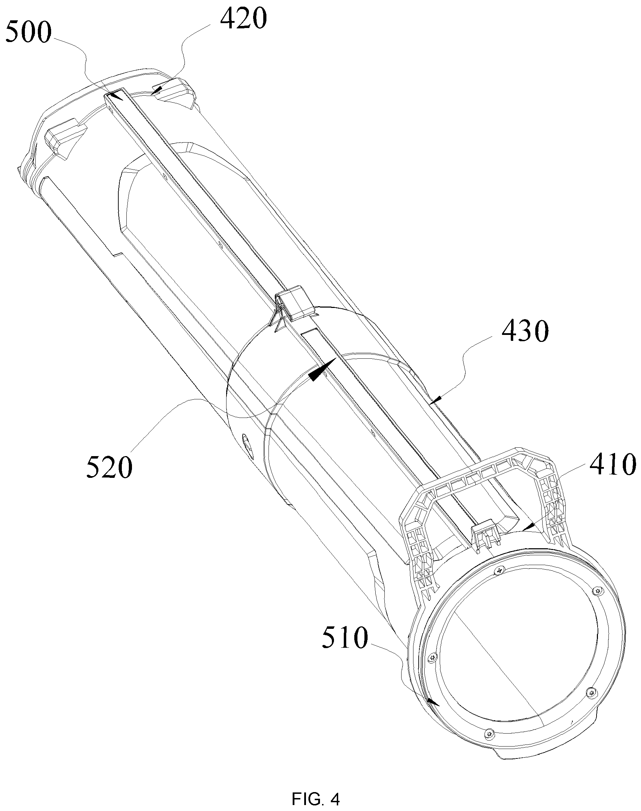

As shown in FIG. 3, the fan assembly 300 includes fan blades 310. As shown in FIG. 4, the air suction tube 400 includes a first end 410, a second end 420, and a cylinder body 430 connecting the first end 410 to the second end 420. The first end 410 faces the fan blades 310, and the second end 420 faces away from the fan blades 310. The first end 410 is closer to the fan blades 310 than the second end 420. Specifically, the first end 410 is closer to the fan blades 310 than the second end 420, and the second end 420 is farther away from the fan blades 310 than the first end 410. The first end 410 of the air suction tube 400 facing the fan blades 310 refers to an end of the air suction tube 400 which is connected to the air suction port 101. The first end 410, the second end 420, and the cylinder body 430 of the air suction tube 400 are all made of the plastic material, that is, the air suction tube 400 is made of the plastic material. When the airflow device is operating, the electric motor 200 drives the fan blades 310 to rotate to generate negative pressure. The air suction tube 400 sucks up sucked objects through the negative pressure. The sucked objects enter from the second end 420 of the air suction tube 400, pass through the cylinder body 430 of the air suction tube 400, and reach the first end 410 of the air suction tube 400. At this time, since the fan blades 310 are made of the plastic material, the fan blades 310 rub against the sucked objects to generate a great amount of static electricity. On the one hand, a control circuit board is provided inside the airflow device, and static electricity has an adverse effect on the control circuit board. If static electricity exists for a long time, static electricity breaks down the control circuit board, causing damage to the control circuit board and making the airflow device unusable. On the other hand, a grip for the user to hold is provided on the airflow device, and the grip is connected to the inside of the airflow device through the wire. Static electricity is transmitted to the grip through the wire, causing the user to feel uncomfortable with the hand shocked by static electricity, resulting in a relatively poor user experience.

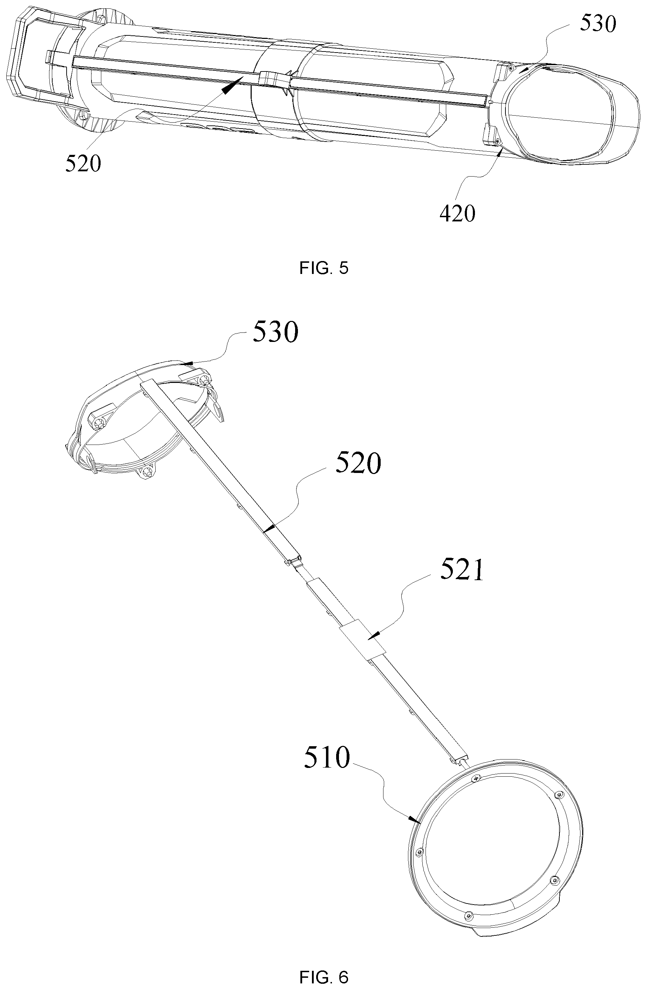

As shown in FIGS. 4 and 5, the airflow device includes a first electrostatic conduction device 500. The first electrostatic conduction device 500 includes an end facing the fan blades 310 and the other end for being in contact with the ground. When the airflow device is used, static electricity generated on the fan blades 310 is conducted to the ground through the first electrostatic conduction device 500. Optionally, the first electrostatic conduction device 500 includes a first electrostatic conduction component 510 at the end facing the fan blades 310 and a third electrostatic conduction component 530 at the other end for being in contact with the ground. That the first electrostatic conduction component 510 faces the fan blades specifically refers to that the first electrostatic conduction component 510 is closer to the fan blades than the third electrostatic conduction component 530.

In some examples, as shown in FIGS. 4 to 6, the first electrostatic conduction device 500 includes the first electrostatic conduction component 510, a second electrostatic conduction component 520, and the third electrostatic conduction component 530. In some examples, the first electrostatic conduction component 510, the second electrostatic conduction component 520, and the third electrostatic conduction component 530 may be integrally formed. In some examples, the first electrostatic conduction component 510, the second electrostatic conduction component 520, and the third electrostatic conduction component 530 may be separately provided.

The first electrostatic conduction component 510 is disposed at the first end 410 of the air suction tube 400 and faces the fan blades 310. The first electrostatic conduction component 510 induces static electricity on the fan blades 310 by induction. For example, when static electricity generated by the fan blades 310 rubbing against the sucked objects is the positive charge, the originally uncharged first electrostatic conduction component 510 generates the negative charge to induce the positive charge on the fan blades 310. Similarly, when static electricity generated by the fan blades 310 rubbing against the sucked objects is the negative charge, the originally uncharged first electrostatic conduction component 510 generates the positive charge to induce the negative charge on the fan blades 310. Optionally, the distance between the first electrostatic conduction component 510 and the fan blades 310 is less than or equal to 15 mm.

In some examples, the distance between the first electrostatic conduction component 510 and the fan blades 310 is greater than 1 mm and less than or equal to 15 mm. In some examples, the distance between the first electrostatic conduction component 510 and the fan blades 310 is greater than 1 mm and less than or equal to 10 mm. In some examples, the distance between the first electrostatic conduction component 510 and the fan blades 310 is greater than 1 mm and less than or equal to 5 mm. In some examples, the distance between the first electrostatic conduction component 510 and the fan blades 310 is greater than 1 mm and less than or equal to 3 mm. In some examples, the distance between the first electrostatic conduction component 510 and the fan blades 310 is greater than 3 mm and less than or equal to 10 mm. In some examples, the distance between the first electrostatic conduction component 510 and the fan blades 310 is greater than 3 mm and less than or equal to 5 mm.

Optionally, the first electrostatic conduction component 510 may be made of the aluminum alloy. Optionally, the first electrostatic conduction component 510 may be made of other conductive metal materials, which is not limited in the present application. The first electrostatic conduction component 510 is disposed at the first end 410 of the air suction tube 400 and faces the fan blades 310, without providing the first electrostatic conduction component 510 on the fan assembly 300 or the electric motor 200 so that the assembly and fixation of the first electrostatic conduction component 510 can be simplified, thereby avoiding the problem of improper assembly and fixation.

In some examples, as shown in FIG. 4, to enable the first electrostatic conduction component 510 to fully induce the static electricity on the fan blades 310, the first electrostatic conduction component 510 may be provided around the first end 410 of the air suction tube 400. The first electrostatic conduction component 510 is an annular structure so that static electricity generated by the fan blades 310 can be induced by the first electrostatic conduction component 510 no matter what angle the fan blades 310 rotate to. In addition, the first electrostatic conduction component 510 may be provided around a portion of the first end 410 of the air suction tube 400, which is not limited in the present application.

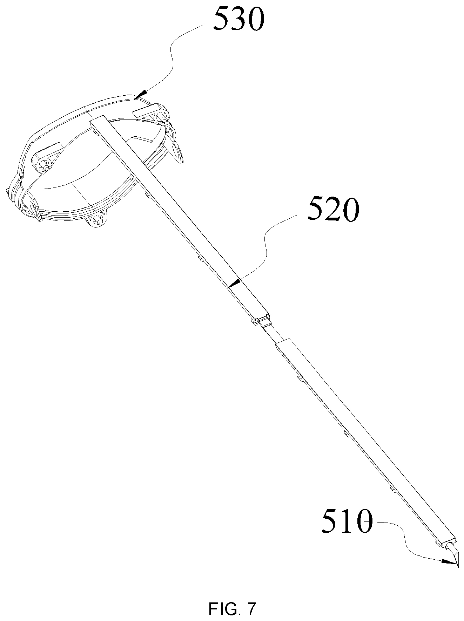

In some examples, as shown in FIG. 7, the first electrostatic conduction component 510 is formed by at least one tip. The first electrostatic conduction component 510 may be provided with at least one tip around the first end 410 of the air suction tube 400, or the first electrostatic conduction component 510 may be provided with at least one tip at some positions at the first end 410 of the air suction tube 400. In addition, the first electrostatic conduction component 510 may be another conductive structure besides the annular structure or the tip, which is not limited in the present application.

The second electrostatic conduction component 520 is disposed on the cylinder body 430 of the airflow device, connected to the first electrostatic conduction component 510, and used for conducting the static electricity induced by the first electrostatic conduction component 510. Optionally, the second electrostatic conduction component 520 may be a long strip-shaped component provided along the front and rear direction of the cylinder body 430 of the air suction tube 400 (that is, the front and rear direction of the airflow device), thereby conducting static electricity while saving materials. In addition, the second electrostatic conduction component 520 may be in another shape along the front and rear direction of the cylinder body 430 of the air suction tube 400 (that is, the front and rear direction of the airflow device), which is not limited in the present application. Optionally, the second electrostatic conduction component 520 may be made of stainless steel. Optionally, the second electrostatic conduction component 520 may be made of other conductive metal materials, which is not limited in the present application. In some examples, the second electrostatic conduction component 520 may be integrally formed. In some examples, the second electrostatic conduction component 520 may include two parts, and the two parts are connected via a conductive structure. In some examples, the second electrostatic conduction component 520 may include three parts, and any two of the three parts are connected via a conductive structure. In some examples, the second electrostatic conduction component 520 may include multiple parts, and any two of the multiple parts are connected via a conductive structure.

In some examples, the second electrostatic conduction component 520 is made of a conductive material with relatively large resistance so that during a process in which static electricity is conducted from the first electrostatic conduction component 510 to the third electrostatic conduction component 530 through the second electrostatic conduction component 520, the conduction speed decreases, thereby avoiding the following problem: the second electrostatic conduction component 520 has a relatively high conduction speed, resulting in rapid instantaneous voltage changes in the airflow device and a probability of damage to the airflow device. In some examples, as shown in FIG. 6, an element 521 is connected to the second electrostatic conduction component 520, and the element 521 has a certain resistance value and is used for decreasing the electrostatic conduction speed of the second electrostatic conduction component 520. Optionally, the element 521 may be a resistor element.

The third electrostatic conduction component 530 is disposed at the second end 420 of the air suction tube 400 and faces away from the fan blades 310. The third electrostatic conduction component 530 is connected to the second electrostatic conduction component 520 and receives the static electricity conducted by the second electrostatic conduction component 520. The third electrostatic conduction component 530 may be in direct or indirect contact with the ground and conduct the static electricity from the second electrostatic conduction component 520 to the ground, thereby releasing static electricity. Specifically, when the airflow device is used, the second end 420 of the air suction tube 400 is continuously in contact with the ground or the sucked objects on the ground. Therefore, when the second end 420 of the air suction tube 400 is in direct contact with the ground, the third electrostatic conduction component 530 is in direct contact with the ground to conduct static electricity to the ground. When the second end 420 of the air suction tube 400 is in contact with the sucked objects on the ground, since the sucked objects on the ground are free of static electricity, it is equivalent to that the second end 420 of the air suction tube 400 is in contact with the ground, that is, the third electrostatic conduction component 530 is in indirect contact with the ground, and static electricity is conducted to the ground through the sucked objects on the ground. In order that when the user uses the airflow device, the third electrostatic conduction component 530 can conduct static electricity to the ground regardless of the angle of the airflow device and how the airflow device is in contact with the ground, the third electrostatic conduction component 530 needs to be disposed around the second end 420 of the air suction tube 400. Optionally, the third electrostatic conduction component 530 may be provided on a portion of the second end 420 of the air suction tube 400, which is not limited in the present application.

Optionally, the third electrostatic conduction component 530 may be made of the aluminum alloy. Optionally, the third electrostatic conduction component 530 may be made of other conductive metal materials, which is not limited in the present application. Since the third electrostatic conduction component 530 is made of metal material, compared with the second end 420 of the air suction tube 400 originally made of the plastic material, the third electrostatic conduction component 530 is more wear-resistant when being in contact with the ground, thereby improving the wear resistance of the air suction tube 400 and the service life of the entire airflow device.

In some examples, the first electrostatic conduction component 510 is fixed to the first end 410 of the air suction tube 400 through a fixing member, and the third electrostatic conduction component 530 is fixed to the second end 420 of the air suction tube 400 through a fixing member. The fixing member may be made of the metal conductive material, and the fixing member may be a screw, or the like, which is not limited in the present application. The second electrostatic conduction component 520 engages with the cylinder body 430 of the air suction tube 400 through a clamping member. As shown in FIG. 6, the second electrostatic conduction component 520 may be connected to the fixing member of the first electrostatic conduction component 510 and the fixing member of the third electrostatic conduction component 530 separately to conduct static electricity on the first electrostatic conduction component 510 to the third electrostatic conduction component 530, or the second electrostatic conduction component 520 may be directly connected to the first electrostatic conduction component 510 and the third electrostatic conduction component 530 to conduct static electricity, which is not limited in the present application.

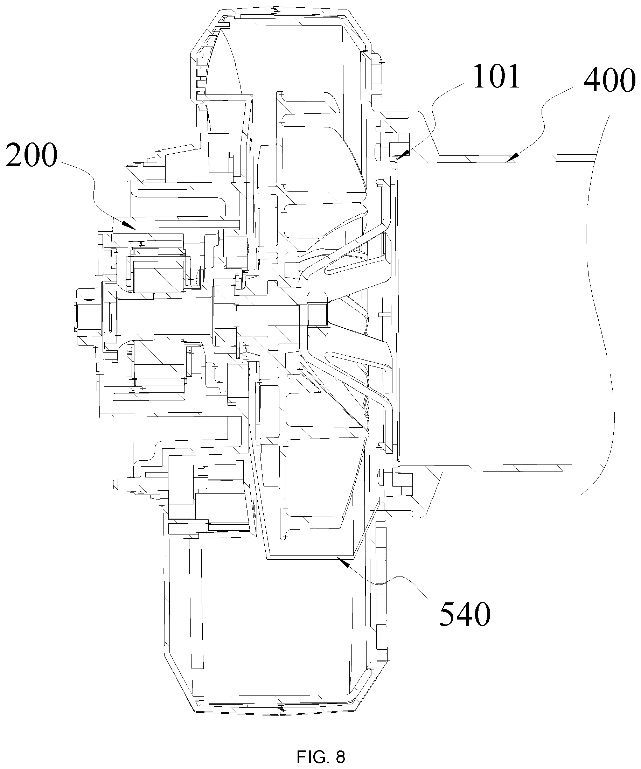

In some examples, as shown in FIG. 8, the first electrostatic conduction device 500 further includes a fourth electrostatic conduction component 540, and an end of the fourth electrostatic conduction component 540 is connected to the electric motor 200 to conduct static electricity in the airflow device outwardly, for example, a great amount of static electricity generated when the fan blades 310 rub against the sucked objects. Optionally, the end of the fourth electrostatic conduction component 540 connected to the electric motor 200 may include a tip. Optionally, the fourth electrostatic conduction component 540 may be a conductive wire.

In some examples, the other end of the fourth electrostatic conduction component 540 may be connected to the first electrostatic conduction component 510 to conduct the static electricity in the airflow device to the first electrostatic conduction component 510, and then the first electrostatic conduction component 510 conducts the static electricity to the second electrostatic conduction component 520 and the third electrostatic conduction component 530, thereby discharging the static electricity through direct or indirect contact between the third electrostatic conduction component 530 and the ground. In some examples, the other end of the fourth electrostatic conduction component 540 may be connected to the second electrostatic conduction component 520, and the second electrostatic conduction component 520 simultaneously receives static electricity from the first electrostatic conduction component 510 and static electricity from the fourth electrostatic conduction component 540 and conducts the static electricity to the third electrostatic conduction component 530 to discharge the static electricity. In addition, when the other end of the fourth electrostatic conduction component 540 is connected to the second electrostatic conduction component 520, the first electrostatic conduction device 500 can conduct static electricity in the airflow device directly through the fourth electrostatic conduction component 540 without providing the first electrostatic conduction component 510.

The first electrostatic conduction component 510 and/or the fourth electrostatic conduction component 540 that is connected to the electric motor 200 are provided at the first end 410 of the air suction tube 400 facing the fan blades 310, the second electrostatic conduction component 520 is provided on the cylinder body of the air suction tube 400, and the third electrostatic conduction component 530 is provided at the second end 420 of the air suction tube 400 facing away from the fan blades 310. In this manner, when the airflow device is used, the static electricity generated on the fan blades 310 is conducted to the second electrostatic conduction component 520 through the first electrostatic conduction component 510 and/or the fourth electrostatic conduction component 540, the static electricity is conducted to the third electrostatic conduction component 530 through the second electrostatic conduction component 520, and finally, the static electricity is conducted to the ground through the third electrostatic conduction component 530 so that the static electricity generated by the fan blades 310 can be conducted to the ground, thereby avoiding the risk of static electricity breaking down the control circuit board and the problem of poor user experience due to the hand shocked by static electricity, preventing the airflow device from being easily damaged by static electricity, and improving the user experience.

As shown in FIG. 1, the airflow device further includes the air blowing port 102 and a collection device 600, and the collection device 600 is connected to the air blowing port 102 so that the sucked objects entering the air suction tube 400 can enter the collection device 600 through the air blowing port 102. The sucked objects are sucked up from the air suction tube 400, pass through the air suction port 101 to reach a cutting assembly, are cut, and then enter the collection device 600 from the air blowing port 102. As shown in FIG. 1, a hook is provided on the air suction tube 400 to facilitate hooking the collection device 600 so that the collection device 600 can be hung, thereby occupying a small space and facilitating the operation. In an example, the collection device 600 may be a kraft paper bag. In an example, the collection device 600 may be a cloth bag. In an example, the collection device 600 may be a collection bucket or a collection box.

In some examples, the collection device 600 is made of the conductive material, and the collection device 600 can conduct static electricity. Optionally, the collection device 600 is made of the conductive material, and the conductive material includes a woven material including a conductive material such as metal. When the airflow device is used, a great amount of static electricity generated when the fan blades 310 rub against the sucked objects is conducted to the electric motor 200 and then conducted by the electric motor 200 to the air blowing port 102 and/or the housing assembly 100. Finally, the collection device 600 can induce the static electricity on the air blowing port 102 and/or the housing assembly 100. During use, the collection device 600 may be in direct or indirect contact with the ground, thereby conducting the static electricity in the airflow device to the ground to discharge the static electricity. The specific manner in which the collection device 600 is in direct or indirect contact with the ground is the same as the manner in which the third electrostatic conduction component 530 is in direct or indirect contact with the ground, and the details are not repeated here.

In some examples, the collection device 600 includes a second electrostatic conduction device 610. The second electrostatic conduction device 610 and the collection device 600 may be integrated, or the second electrostatic conduction device 610 and the collection device 600 may be separately provided, which is not limited in the present application. The second electrostatic conduction device 610 includes a first end 611 connected to the collection device 600 and a second end 612 facing away from the collection device 600. Optionally, when the collection device 600 is made of the conductive material, the first end 611 of the second electrostatic conduction device 610 is used for receiving static electricity from the collection device 600 and conducting the static electricity to the second end 612. During use, the second end 612 of the second electrostatic conduction device 610 is in direct or indirect contact with the ground to discharge static electricity. The specific manner in which the second end 612 of the second electrostatic conduction device 610 is in direct or indirect contact with the ground is the same as the manner in which the third electrostatic conduction component 530 is in direct or indirect contact with the ground, and the details are not repeated here.

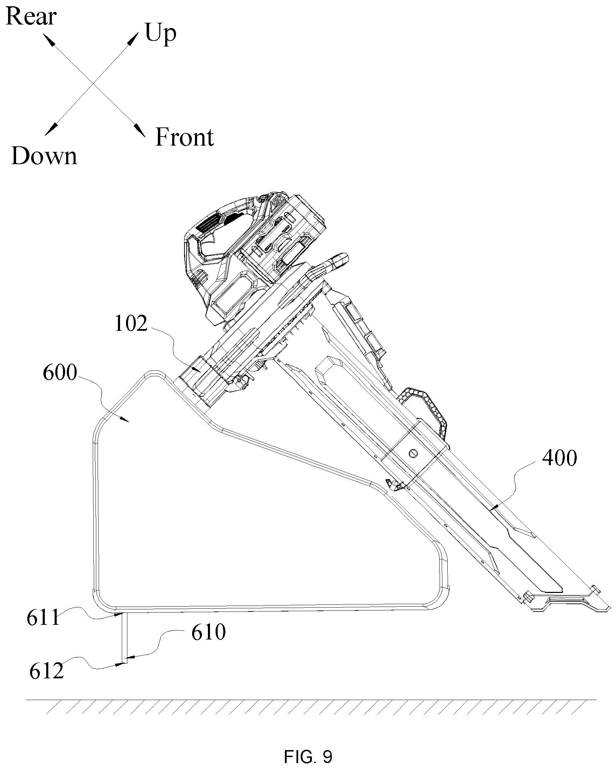

Optionally, as shown in FIG. 9, the second electrostatic conduction device 610 may be disposed on a side of the collection device 600 that is closest to the ground so that the second electrostatic conduction device 610 can be in direct or indirect contact with the ground even when the second electrostatic conduction device 610 is shorter, thereby saving costs. Optionally, the second electrostatic conduction device 610 may be disposed on another part of the collection device 600, which is not limited in the present application.

As shown in FIG. 9, the second electrostatic conduction device 610 may be a conductive wire. Optionally, the second electrostatic conduction device 610 may be of another structural style, which is not limited in the present application. Compared to discharging static electricity directly through direct or indirect contact between the collection device 600 and the ground, the second electrostatic conduction device 610 is provided on the collection device 600 so that static electricity can be discharged even when the collection device 600 is far away from the ground and cannot conduct static electricity, thereby making the shape and volume setting of the collection device 600 more flexible.

In some examples, the airflow device may be provided with the first electrostatic conduction device 500 and the second electrostatic conduction device 610 at the same time so that when the airflow device is used, whether the second end 420 of the air suction tube 400 is in direct or indirect contact with the ground or the collection device 600 is in direct or indirect contact with the ground, static electricity can be conducted to the ground, thereby further reducing the probability of the airflow device being damaged by static electricity.

In some examples, the airflow device further includes a third electrostatic conduction device 700, and the third electrostatic conduction device 700 includes a first end 710, a second end 720, and a connector 730 connecting the first end 710 to the second end 720. The third electrostatic conduction device 700 has the first end 710 facing the fan blades 310, and the distance between the first end 710 and the fan blades 310 is less than or equal to 15 mm, thereby inducing the static electricity generated when the fan blades 310 rub against the sucked objects. The first end 710 of the third electrostatic conduction device 700 is closer to the fan blades 310 than the second end 720.

In some examples, the distance between the first end 710 of the third electrostatic conduction device 700 and the fan blades 310 is greater than 1 mm and less than or equal to 15 mm. In some examples, the distance between the first end 710 of the third electrostatic conduction device 700 and the fan blades 310 is greater than 1 mm and less than or equal to 10 mm. In some examples, the distance between the first end 710 of the third electrostatic conduction device 700 and the fan blades 310 is greater than 1 mm and less than or equal to 5 mm. In some examples, the distance between the first end 710 of the third electrostatic conduction device 700 and the fan blades 310 is greater than 1 mm and less than or equal to 3 mm. In some examples, the distance between the first end 710 of the third electrostatic conduction device 700 and the fan blades 310 is greater than 3 mm and less than or equal to 10 mm. In some examples, the distance between the first end 710 of the third electrostatic conduction device 700 and the fan blades 310 is greater than 3 mm and less than or equal to 5 mm.

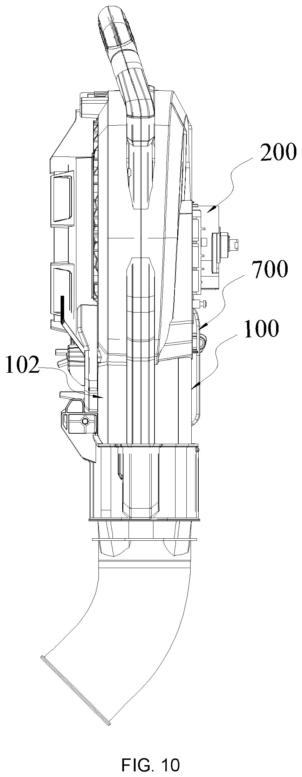

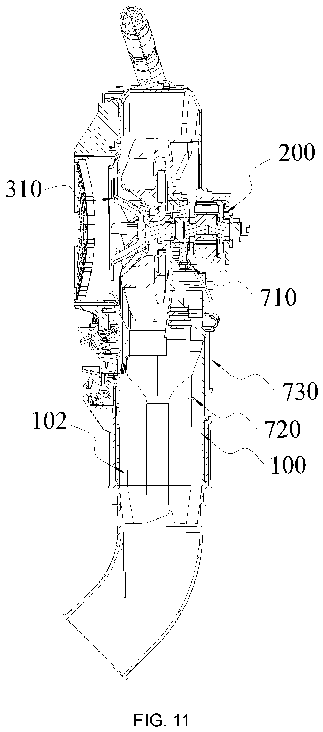

Optionally, as shown in FIGS. 10 and 11, since static electricity generated on the fan blades 310 by friction may be directly transferred to the electric motor 200 connected to the fan blades 310, the first end 710 of the third electrostatic conduction device 700 may be directly electrically connected to the electric motor 200 to conduct static electricity. The second end 720 of the third electrostatic conduction device 700 is connected to the air blowing port 102, the second end 720 of the third electrostatic conduction device 700 includes at least one tip, and the tip has the function of discharging static electricity so that the static electricity conducted from the first end 710 can be discharged into the air, thereby discharging the static electricity of the airflow device. Specifically, the tip of the second end 720 of the third electrostatic conduction device 700 is disposed inside the air blowing port 102. When the airflow device blows air, the static electricity conducted from the first end 710 is discharged into the air and neutralized with the charge in the wind, thereby eliminating static electricity. The second end 720 of the third electrostatic conduction device 700 may include two, three, or four tips. The more tips the second end 720 of the third electrostatic conduction device 700 includes, the better the static electricity discharging effect is. In some examples, the second end 720 of the third electrostatic conduction device 700 may be disposed on another structure that can sense the blowing of air other than the air blowing port, which is not limited in the present application.

In some examples, as shown in FIGS. 10 and 11, to facilitate the installation of the third electrostatic conduction device 700, the connector 730 for fixing the third electrostatic conduction device 700 may be disposed outside the housing assembly 100, and the second end 720 of the third electrostatic conduction device 700 is disposed inside the air blowing port 102 by being fixed on the housing assembly 100. Optionally, the third electrostatic conduction device 700 may be directly mounted inside the housing assembly 100, and the second end 720 of the third electrostatic conduction device 700 may be fixed by providing a fixing assembly inside the housing assembly 100 or the air blowing port 102.

The third electrostatic conduction device 700 is made of the conductive material. Optionally, the third electrostatic conduction device 700 may be a conductive wire structure as shown in the figure. In addition, the third electrostatic conduction device 700 may be another conductive structure, which is not limited in the present application.

Optionally, the airflow device may be provided with the first electrostatic conduction device 500, the second electrostatic conduction device 610, and the third electrostatic conduction device 700 at the same time. Optionally, the airflow device may be provided with any two of the first electrostatic conduction device 500, the second electrostatic conduction device 610, and the third electrostatic conduction device 700 at the same time. Optionally, the airflow device may be provided with any one of the first electrostatic conduction device 500, the second electrostatic conduction device 610, and the third electrostatic conduction device 700, which is not limited in the present application. When three electrostatic conduction devices are provided at the same time or when two electrostatic conduction devices are provided at the same time, the static electricity generated on the fan blades 310 by friction can be eliminated in a variety of manners, thereby improving the effect of the airflow device in eliminating static electricity and further reducing the probability of the airflow device being damaged by static electricity.

In some examples, the airflow device includes an air blowing tube 800 detachably connected to the air blowing port 102, and the airflow device may use the air blowing tube 800 to gather scattered objects such as leaves. When the airflow device blows air, the rotating fan blades 310 rub against the air and generate static electricity. At this time, the static electricity generated in the airflow device may be discharged by the third electrostatic conduction device 700.

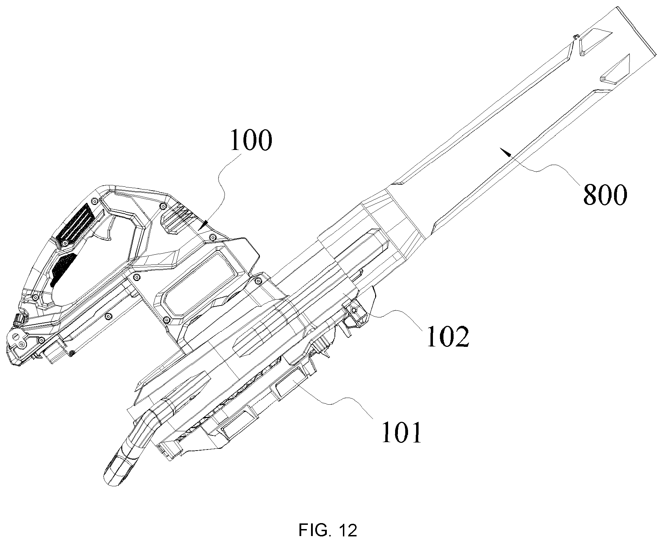

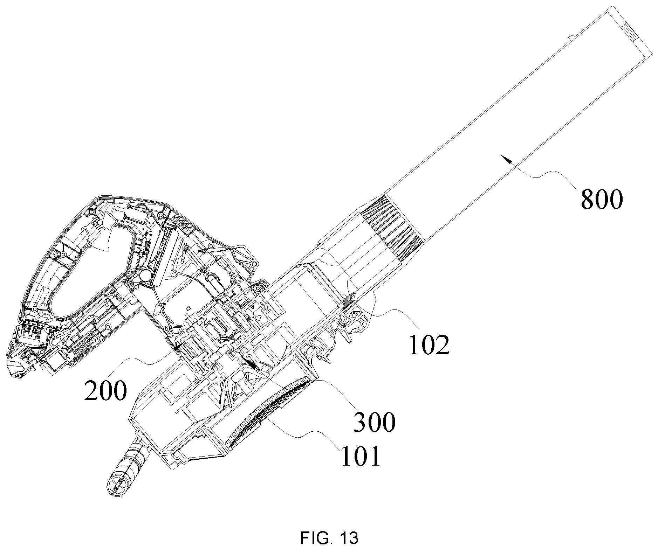

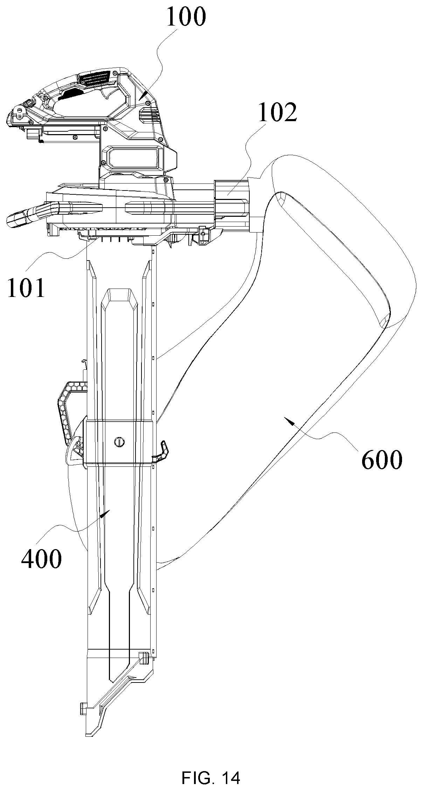

As shown in FIG. 1, the airflow device further includes a battery pack 120, a plug-in structure is provided at the rear of the housing assembly 100 (that is, at the rear of the airflow device), and the battery pack 120 is detachably plugged into the plug-in structure. In some examples, the direction in which the battery pack 120 is plugged is at an included angle to the vertical direction, making it easier for the user to disassemble and assemble the battery pack 120.Referring to FIGS. 12 to 14, the airflow device includes the housing assembly 100, the electric motor 200, and the fan assembly 300. The present application does not limit configuration manners of the fan assembly 300 and the electric motor 200. The fan assembly 300 may be connected to a motor shaft of the electric motor 200, and the electric motor 200 directly drives the fan assembly 300 to rotate. Alternatively, the fan assembly 300 may not be connected to the electric motor 200, and the electric motor 200 indirectly drives the fan assembly 300 to rotate. FIGS. 12 and 13 are schematic views of the airflow device in a blowing state. As shown in FIGS. 12 and 13, the airflow device includes the air blowing tube 800 detachably disposed at the air blowing port 102. The other end of the air blowing tube 800 not connected to the air blowing port 102 forms a blowing opening for blowing air outwards. FIG. 14 is a schematic view of the airflow device in a suction state. As shown in FIG. 14, the airflow device further includes the air suction tube 400 detachably disposed at the air suction port 101. The other end of the air suction tube 400 not connected to the air suction port 101 forms a suction opening for sucking a sucked object. Since an angle exists between the air suction port 101 and the air blowing port 102, the fan assembly 300 includes at least a centrifugal fan 320.

The fan assembly 300 is connected to the motor shaft of the electric motor 200. Driven by the electric motor 200, the motor shaft rotates and synchronously drives the fan assembly 300 to rotate. The rotation of the fan assembly 300 generates negative pressure. When the airflow device is in the blowing state, due to the fan assembly 300, the airflow enters from the air suction port 101, passes through the electric motor 200, then flows towards the air blowing port 102, and is blown outwards after flowing through the air blowing tube 800. When the airflow device is in the suction state, the fan assembly 300 provides power for the airflow device to suck fallen leaves and the like. The air suction tube 400 sucks the sucked object using the negative pressure. The sucked object includes but is not limited to fallen leaves, dust, branches, and pebbles.

As shown in FIG. 14, the airflow device further includes the collection device 600. When the airflow device is in the suction state, the collection device 600 is connected to the air blowing port 102 so that the sucked object entering the air suction tube 400 can enter the collection device 600 through the air blowing port 102. The sucked object is sucked from the air suction tube 400, passes through the air suction port 101 to reach and be cut by a cutting assembly, and then enters the collection device 600 from the air blowing port 102. When the airflow device is in the blowing state, the collection device 600 is removed from the air blowing port 102, and the air blowing tube 800 is connected to the air blowing port 102.

In some examples, the air blowing tube 800 is a hose with a smooth inner wall, and the hose is easy to store. In some specific examples, the air blowing tube 800 has a bellows structure, specifically including spiral support strips for support and a soft ventilation material covering the spiral support strips. The soft ventilation material may be cotton cloth, plastic cloth, or the like. The air blowing tube 800 with a hose structure may be used in various airflow devicees capable of blowing or sucking air, such as a handheld blower, a backpack blower, a blower vacuum, and a vacuum cleaner. In some examples, the air blowing tube 800 is a pipe made of a plastic material. In some examples, the air blowing tube 800 is a pipe which is made of a metal material and has a certain hardness so that the air blowing tube 800 is less prone to be damaged. Moreover, in the process where the air blowing tube 800 is used for blowing air, the air blowing tube 800 made of the metal material may directly or indirectly conduct static electricity to the ground when in direct or indirect contact with the ground so that the static electricity is eliminated.

The fan assembly 300 includes the fan blades 310. When rotating, the fan assembly 300 sucks external dust and other particles through the air suction port 101. As a result, during the operation of the airflow device, the fan blades 310 generate static electricity due to friction with the dust and the particles. A control circuit board and other electronic components are disposed in the airflow device. The static electricity generated by the friction between the fan blades 310 and the dust and the particles may be transferred to the electronic components. When accumulating to a certain degree, the static electricity may break down the electronic components, damaging the electronic components and causing the airflow device to malfunction.

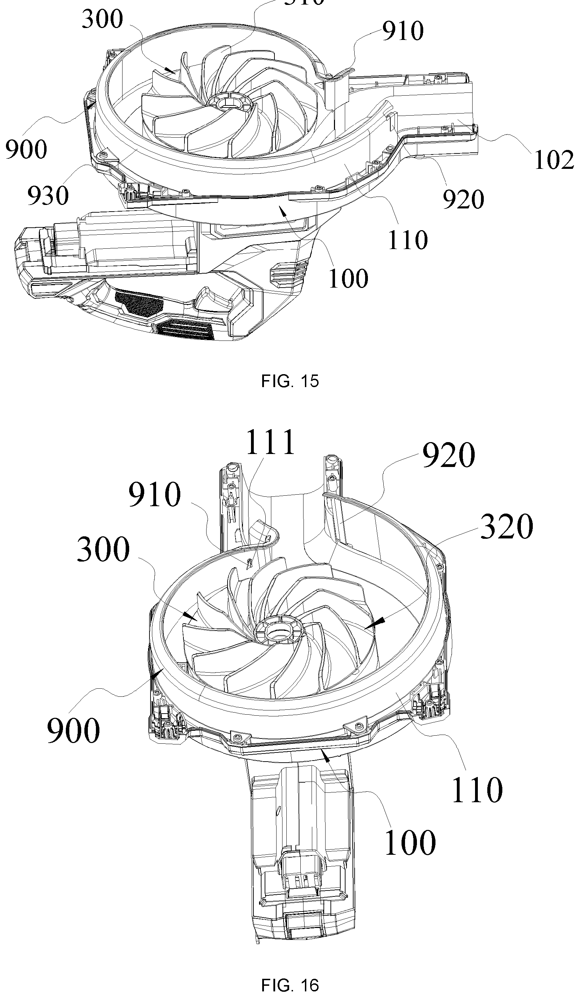

Contrary to the previously illustrated exemplary airflow devices and corresponding electrostatic conduction devices, FIGS. 15 to 20 effectively illustrate airflow devices according to embodiments of the invention.

As shown in FIGS. 15 and 16, the airflow device according to an embodiment of the invention includes a baffle 110. The baffle 110 is disposed in the housing assembly 100 along the circumferential direction of the fan assembly 300. That is, the baffle 110 is configured to surround the fan assembly 300. Since the fan assembly 300 needs to communicate with the air blowing port 102, the baffle 110 is specifically configured to surround part of the fan assembly 300. The baffle 110 is provided with a gap to communicate with the air blowing port 102. Optionally, the baffle 110 is detachably mounted on the inner side of the housing assembly 100. Optionally, the baffle 110 is part of the housing assembly 100, which means that the baffle 110 and the housing assembly 100 are integrally formed. The housing assembly 100 is directly formed with the baffle 110. When disposed along the circumferential direction of the fan assembly 300, the baffle 110 includes one end relatively close to the fan assembly 300 and the other end relatively far from the fan assembly 300.

The airflow device includes an electrostatic conduction device 900 disposed along the circumferential direction of the fan assembly 300. The electrostatic conduction device 900 includes a first end 910 and a second end 920. The distance between the first end 910 and the fan blades 310 is shorter than the distance between the second end 920 and the fan blades 310. The distance between the second end 920 and the air blowing port 102 is shorter than the distance between the first end 910 and the air blowing port 102. The first end 910 is disposed near the fan blades 310 and configured to be close to the fan blades 310. The second end 920 is disposed near the air blowing port 102 and configured to be close to the air blowing port 102. The electrostatic conduction device 900 further includes a connecting section 930. The connecting section 930 is configured to connect the first end 910 to the second end 920. The first end 910 senses the static electricity on the fan blades 310, and the static electricity is transferred to the second end 920 through the connecting section 930. The first end 910 and the second end 920 are configured as metal ends and the connecting section 930 is configured as a conductive strip so that the electrostatic conduction device 900 is conductive. Optionally, the first end 910, the second end 920, and the connecting section 930 may be made of an aluminum alloy. Optionally, the first end 910, the second end 920, and the connecting section 930 may be made of any other conductive metal material, which is not limited in the present application. Optionally, the first end 910 and the second end 920 may be made of any conductive metal material, and the connecting section 930 may be a wire or another conductor.

The electrostatic conduction device 900 may be an integrally formed metal member, that is, the first end 910, the second end 920, and the connecting section 930 are integrally formed. Alternatively, the first end 910, the second end 920, and the connecting section 930 may be formed separately and then fixedly connected to each other. The first end 910, the second end 920, and the connecting section 930 are connected through a conductive material.

The electrostatic conduction device 900 is specifically disposed on the baffle 110 to surround the fan assembly 300. Optionally, the electrostatic conduction device 900 is disposed on the inner side surface of the baffle 110 (that is, the side surface of the baffle 110 facing the fan assembly 300). Optionally, the electrostatic conduction device 900 is disposed on the outer side of the baffle 110 (that is, the side surface of the baffle 110 facing away from the fan assembly 300). FIGS. 15 and 16 show that the electrostatic conduction device 900 is disposed on the outer side of the baffle 110. Based on that the preceding baffle 110 is detachably disposed in the housing assembly 100 or the baffle 110 is the part of the housing assembly 100, the electrostatic conduction device 900 is disposed on the baffle 110, which refers to that the electrostatic conduction device 900 is disposed on the inner side surface of the baffle 110 or the outer side of the baffle 110 or refers to that the electrostatic conduction device 900 is directly disposed on the inner side surface of the housing assembly 100 or the outer side of the housing assembly 100. However, the first end 910 and the second end 920 always include portions that are disposed on the inner side surface of the baffle 110.

In some embodiments, the electrostatic conduction device 900 is disposed on the baffle 110, which specifically refers to that the electrostatic conduction device 900 is embedded in the baffle 110. A surrounding groove is provided on the outer or inner side of the baffle 110. The electrostatic conduction device 900 is fixed in the surrounding groove to be embedded in the baffle 110. In some embodiments, the electrostatic conduction device 900 is disposed on the baffle 110, which specifically refers to that the electrostatic conduction device 900 is directly fixed to the baffle 110. The electrostatic conduction device 900 protrudes from the baffle 110. The present application does not limit a specific manner of fixing the electrostatic conduction device 900 to the preceding manners: the electrostatic conduction device 900 is fixed in the surrounding groove or is directly fixed to the baffle 110. Any fixing manner in which the electrostatic conduction device 900 is firmly fixed to the baffle 110 is acceptable. In addition, the electrostatic conduction device 900 may be disposed on the baffle 110 in other manners. A manner in which the electrostatic conduction device 900 is disposed on the baffle 110 is not limited in the present application.

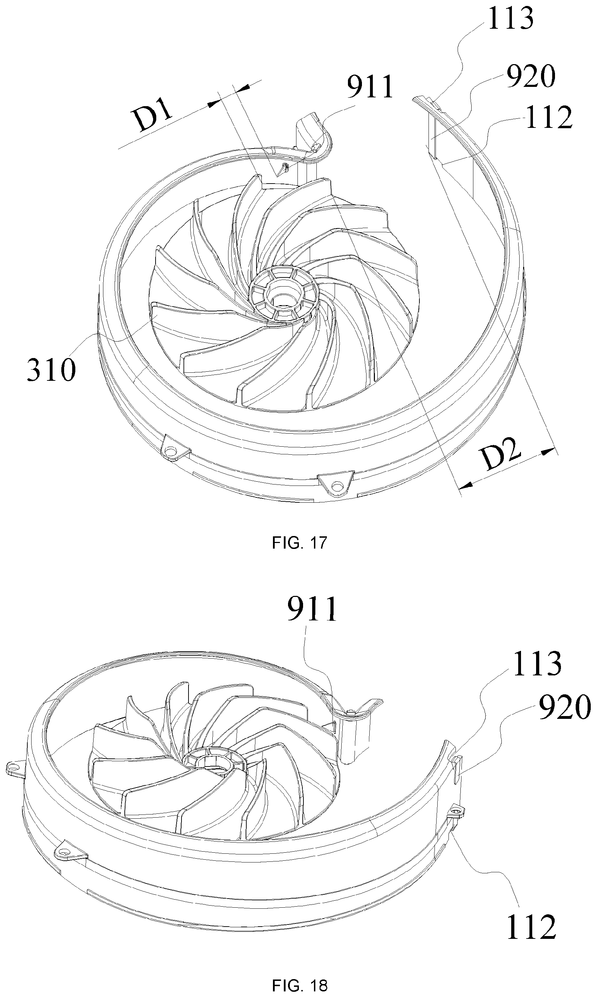

When the electrostatic conduction device 900 is disposed on the inner side surface of the baffle 110 or the outer side of the baffle 110, both the first end 910 and the second end 920 always include portions that are disposed on the inner side surface of the baffle 110. That is, the electrostatic conduction device 900 is disposed on the inner side surface of the baffle 110 or the outer side of the baffle 110, which specifically refers to that the connecting section 930 is disposed on the inner side surface of the baffle 110 or the outer side of the baffle 110. As shown in FIG. 16, the baffle 110 is provided with a first opening 111. The first opening 111 matches the first end 910 so that when the electrostatic conduction device 900 is disposed on the outer side of the baffle 110, the first end 910 passes through the first opening 111 to be disposed in the baffle 110. As shown in FIGS. 17 and 18, the baffle 110 is also provided with a second opening 112 and a third opening 113. The second opening 112 and the third opening 113 match the second end 920 so that when the electrostatic conduction device 900 is disposed on the outer side of the baffle 110, the second end 920 passes through the second opening 112 to be in the baffle 110 and then passes through the third opening 113 to be fixed outside the baffle 110 near the third opening 113. Thus, the second end 920 includes a portion disposed on the inner side surface of the baffle 110.

The first end 910 of the electrostatic conduction device 900 is configured to be close to the fan blades 310. The first end 910 senses the static electricity on the fan blades 310 such that the static electricity on the fan blades 310 is transferred to the first end 910. When the static electricity generated by the friction between the fan blades 310 and the dust and the particles is a positive charge, the originally uncharged first end 910 generates a negative charge to sense the positive charge on the fan blades 310. Similarly, if the static electricity generated by the fan blades 310 and the dust and the particles is a negative charge, the originally uncharged first end 910 generates a positive charge to sense the negative charge on the fan blades 310. The second end 920 is disposed in the air blowing port 102. When the airflow device blows, the static electricity on the second end 920 is carried into the air, thereby eliminating the static electricity. Moreover, in addition to the fan blades 310, the baffle 110 and the housing assembly 100 also generate some static electricity during friction with the dust and the particles. The first end 910 can also sense the static electricity on the baffle 110 and the housing assembly 100.

FIGS. 15 to 18 are schematic views showing that the electrostatic conduction device 900 is disposed on the baffle 110. As shown in FIGS. 17 and 18 the first end 910 of the electrostatic conduction device 900 is disposed at the end of the baffle 110 relatively close to the fan assembly 300, and the second end 920 of the electrostatic conduction device 900 is disposed at the other end of the baffle 110 relatively far from the fan assembly 300. The first end 910 is configured to include at least one tip 911. The distance D1 between the tip 911 and the fan blades 310 is less than or equal to 15 mm. The distance D1 between the tip 911 and the fan blades 310 is relatively short so that the static electricity on the fan blades 310 can be better sensed. The distance D1 between the tip 911 and the fan blades 310 specifically refers to the distance between the edge of the tip 911 and the edge of the fan blade 310 that is closest to the tip 911. Optionally, the distance D1 between the tip 911 and the fan blades 310 is 13 mm. Optionally, the distance D1 between the tip 911 and the fan blades 310 is 11.5 mm. Optionally, the distance D1 between the tip 911 and the fan blades 310 is 9 mm. In addition, the first end 910 may include two tips, three tips, four tips, or more. When the distance D1 between the first end 910 and the fan blades 310 remains unchanged, the greater the number of tips provided on the first end 910, the better a static electricity absorption effect.

In some embodiments, the distance D2 between the electrostatic conduction device 900 and the outer edge of the fan blades 310 is less than or equal to 90 mm. The first end 910 of the electrostatic conduction device 900 is disposed at the end of the baffle 110 relatively close to the fan assembly 300, and the second end 920 of the electrostatic conduction device 900 is disposed at the other end of the baffle 110 relatively far from the fan assembly 300. Therefore, as shown in FIG. 17, the distance D2 between the electrostatic conduction device 900 and the outer edge of the fan blades 310 specifically refers to the distance between the second end 920 and the outer edge of the fan blades 310. Optionally, the distance D2 between the electrostatic conduction device 900 and the outer edge of the fan blades 310 is 85 mm. Optionally, the distance D2 between the electrostatic conduction device 900 and the outer edge of the fan blades 310 is 78 mm. Optionally, the distance D2 between the electrostatic conduction device 900 and the outer edge of the fan blade 310 is 73 mm.

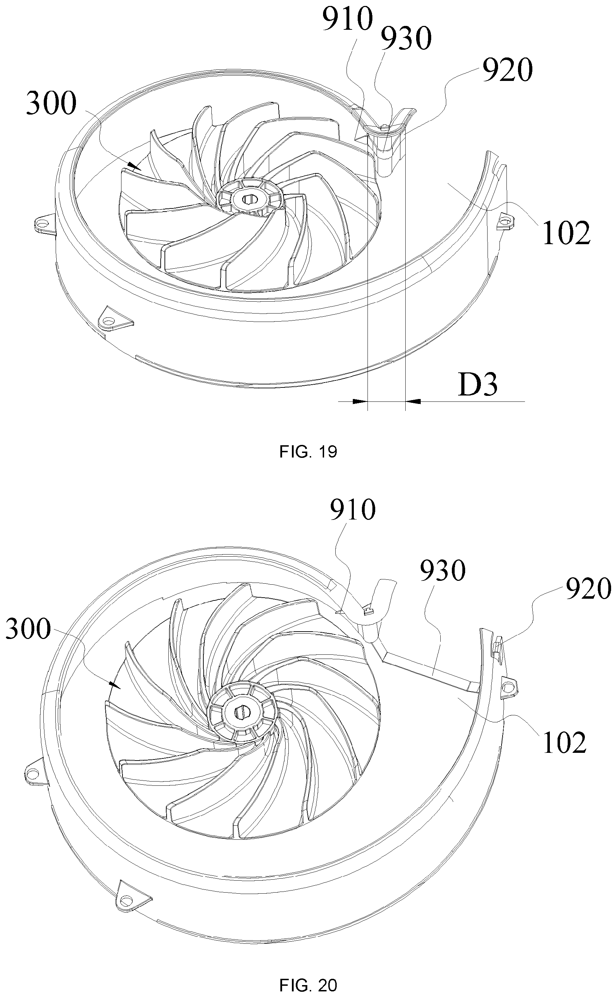

FIG. 19 is a schematic view showing that the electrostatic conduction device 900 in an embodiment is disposed on the baffle 110. In this case, the electrostatic conduction device 900 is entirely disposed at the end of the baffle 110 relatively close to the fan assembly 300. Furthermore, the electrostatic conduction device 900 is disposed on the inner side surface of the baffle 110, and the second end 920 is disposed at a position close to the air blowing port 102. When the airflow device is in operation, the first end 910 senses the static electricity on the fan blades 310. The static electricity is transferred to the second end 920 through the connecting section 930. The static electricity on the second end 920 is blown into the air.

As shown in FIG. 19, the minimum linear distance D3 between the first end 910 of the electrostatic conduction device 900 and the second end 920 of the electrostatic conduction device 900 is greater than or equal to 25 mm. Optionally, the minimum linear distance D3 between the first end 910 and the second end 920 is 28 mm. Optionally, the minimum linear distance D3 between the first end 910 and the second end 920 is 32 mm. Optionally, the minimum linear distance D3 between the first end 910 and the second end 920 is 30 mm. The minimum connecting distance between the first end 910 of the electrostatic conduction device 900 and the second end 920 of the electrostatic conduction device 900 is greater than or equal to 25 mm, that is, the length of the electrostatic conduction device 900 is greater than or equal to 25 mm. Optionally, the length of the electrostatic conduction device 900 is 30 mm. Optionally, the length of the electrostatic conduction device 900 is 32 mm. Optionally, the length of the electrostatic conduction device 900 is 35 mm.

FIG. 20 is a schematic view showing that the electrostatic conduction device 900 in an embodiment is disposed on the baffle 110. As shown in FIG. 20, the first end 910 of the electrostatic conduction device 900 is disposed at the end of the baffle 110 relatively close to the fan assembly 300, the second end 920 of the electrostatic conduction device 900 is disposed at the other end of the baffle 110 relatively far from the fan assembly 300, and the connecting section 930 of the electrostatic conduction device 900 crosses the air blowing port 102 to directly connect the first end 910 to the second end 920. When the airflow device is in operation, the first end 910 senses the static electricity on the fan blades 310. The static electricity is transferred to the second end 920 through the connecting section 930. The static electricity on both the connecting section 930 and the second end 920 is blown into the air.

The electrostatic conduction device is disposed on the baffle of the airflow device. The static electricity generated on the fan blades, the baffle, and the like is sensed through one end of the electrostatic conduction device. The other end of the electrostatic conduction device is disposed at the air blowing port. Based on that the airflow device blows the static electricity into the air while blowing, the static electricity on the airflow device is eliminated. Thus, the airflow device is less prone to be damaged by the static electricity, and user experience is improved.

An antistatic material can be added to at least one of the fan blades 310, the baffle 110, and the housing assembly 100. Thus, the airflow device in operation is less prone to generate the static electricity during the friction with the dust and the particles. The resistivity of the antistatic material is less than or equal to 10⁶ Ω·m. Thus, the fan blades 310, the baffle 110, or the housing assembly 100 has good conductivity when generating the static electricity, thereby reducing the probability that the static electricity accumulates on the fan blades 310, the baffle 110, or the housing assembly 100, damaging the airflow device. Optionally, the resistivity of the antistatic material may be 9⁶ Ω·m. Optionally, the resistivity of the antistatic material may be 10⁵ Ω·m.

The airflow device can have multiple portions that may generate friction with the dust and the particles. The fan blades 310, the baffle 110, and the housing assembly 100 may generate the friction with the dust and the particles. The fan blades 310, the baffle 110, and the housing assembly 100 may be made of two different materials. Optionally, the fan blades 310, the baffle 110, or the housing assembly 100 may each be made of two different materials separately. Optionally, any two of the fan blades 310, the baffle 110, and the housing assembly 100 are made of a first material while the remaining one is made of a second material different from the first material. Optionally, any two of the fan blades 310, the baffle 110, and the housing assembly 100 are made of the second material while the remaining one is made of the first material different from the second material.

Based on the concept of electrostatic series, when two materials come into contact, the former is positively charged and the latter is negatively charged. That is to say, when friction is generated between objects of different materials, one object must be positively charged and the other object must be negatively charged. After the friction with the dust and the particles, the first material loses electrons so that the first material is positively charged. After the friction with the dust and the particles, the second material obtains electrons so that the second material is negatively charged. Alternatively, after the friction with the dust and the particles, the first material obtains electrons so that the first material is negatively charged. After the friction with the dust and the particles, the second material loses electrons so that the second material is positively charged. The positive and negative charges between the first material and the second material flow mutually using the dust and the particles as carriers. Thus, the static electricity is eliminated. With this configuration, the static electricity can be eliminated through the materials of the airflow device, thereby improving the user experience and preventing the components in the airflow device from being damaged by the static electricity.

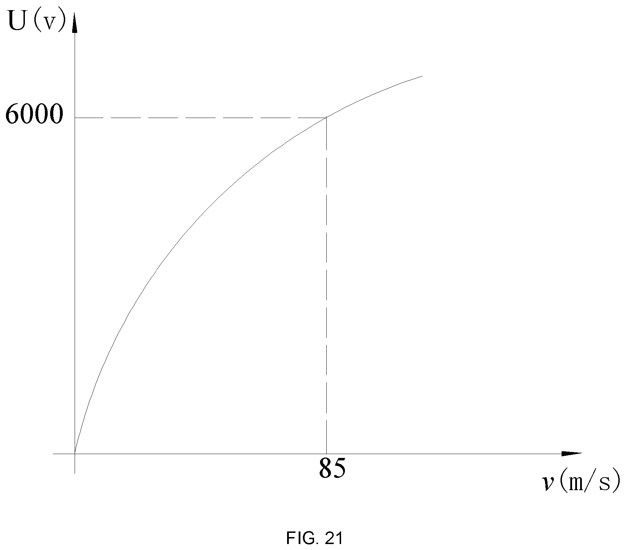

The airflow device can be provided with a velocity detection device that detects the linear velocity of the fan assembly 300. The velocity detection device may be disposed at any convenient position on the airflow device for detecting the linear velocity of the fan assembly 300. The present application does not limit the position of the velocity detection device. As shown in FIG. 21, a proportional relationship exists between the linear velocity of the fan assembly 300 and the static charge generated by the fan blades 310. When the linear velocity of the fan assembly 300 reaches 85 m/s, the static charge accumulated on the fan blades 310 reaches 6000 V. In this case, it is necessary to use the electrostatic conduction device 900 to eliminate the static electricity on the airflow device. Therefore, if the linear velocity of the fan assembly 300 of the airflow device is always less than 85 m/s, the airflow device can operate normally without using the electrostatic conduction device 900. In cases where the linear velocity of the fan assembly 300 is greater than or equal to 85 m/s, the airflow device needs to be provided with the electrostatic conduction device 900.

It is to be noted that the technical solutions described in the present application may be applied to different airflow devices such as a blower vacuum with a blowing mode and a suction mode. When the present application mentions the "airflow device", the type of the airflow device is not limited. As long as the device does work through the flow of airflow, the device may be referred to as the "airflow device".

The basic principles, main features, and advantages of this application are shown and described above. It is to be understood by those skilled in the art that the aforementioned embodiments do not limit the present invention in any form. The present invention is defined by the following claims.

## Claims

1. An airflow device, comprising:
a housing assembly (100);
an electric motor (200) disposed in the housing assembly (100);
a fan assembly (300) comprising fan blades (310), wherein the fan assembly (300) is configured to be driven by the electric motor (200) to generate an airflow;
an air suction port (101) configured as an inlet for the airflow;
an air blowing port (102) configured as an outlet for the airflow; and
an electrostatic conduction device (900), wherein the electrostatic conduction device (900) comprises a first end (910) configured to be close to the fan blades (310) and a second end (920) configured to be close to the air blowing port (102), wherein a distance between the first end (910) and the fan blades (310) is shorter than a distance between the second end (920) and the fan blades (310), a distance between the second end (920) and the air blowing port (102) is shorter than a distance between the first end (910) and the air blowing port (102); and
in use, the first end (910) senses a static electricity on the fan blades (310), the static electricity is transferred to the second end (920), and the static electricity at the second end (920) is blown into the airflow; **characterized in that**
the electrostatic conduction device (900) is disposed along a circumferential direction of the fan assembly (300);
a baffle (110) is disposed in the housing assembly (100) along the circumferential direction of the fan assembly (300); and
the first end (910) and the second end (920) always include portions that are disposed on an inner side surface of the baffle (110).

2. The airflow device according to claim 1, wherein the baffle (110) is detachably mounted on an inner side of the housing assembly (100).

3. The airflow device according to claim 1, wherein the baffle (110) is configured as part of the housing assembly (100).

4. The airflow device according to claim 1, wherein the electrostatic conduction device (900) is disposed on an inner side surface of the baffle (110) or an outer side of the baffle (110).

5. The airflow device according to claim 1, wherein the electrostatic conduction device (900) is embedded in the baffle (110), the first end (910) passes through the baffle (110) to be close to the fan blades (310), and the second end (920) passes through the baffle (110) to be close to the air blowing port (102).

6. The airflow device according to claim 5, wherein the baffle (110) is provided with a first opening (111) which matches the first end (910), and the first end (910) passes through the first opening (111) to be close to the fan blades (310).

7. The airflow device according to claim 5, wherein the baffle (110) is provided with a second opening (112) and a third opening (113) which match the second end (920), and the second end (920) passes through the second opening (112) and the third opening (113) and is fixed on an inner side of the baffle (110) to be close to the air blowing port (102).

8. The airflow device according to claim 1, wherein the electrostatic conduction device (900) is configured as an integrally formed metal member.

9. The airflow device according to claim 1, wherein the electrostatic conduction device (900) further comprises a connecting section (930), the connecting section (930) is configured to connect the first end (910) to the second end (920), the first end (910) and the second end (920) are configured as metal ends, and the connecting section (930) is configured as a conductive strip.

10. The airflow device according to claim 1, wherein the first end (910) is configured to comprise at least one tip (911), and a distance between the at least one tip (911) and the fan blades (310) is less than or equal to 15 mm.

11. The airflow device according to claim 1, wherein the fan assembly (300) comprises at least a centrifugal fan (320).

12. The airflow device according to claim 1, wherein an antistatic material is added to the fan blades (310), the baffle (110), or the housing assembly (100).

13. The airflow device according to claim 12, wherein a resistivity of the antistatic material is less than or equal to 10⁶ Ω·m.

14. The airflow device according to claim 1, wherein a minimum linear distance between the first end (910) and the second end (920) is greater than or equal to 25 mm.

## Patentansprüche

1. Luftstromvorrichtung, umfassend:
eine Gehäuseanordnung (100);
einen Elektromotor (200), der in der Gehäuseanordnung (100) angeordnet ist;
eine Lüfteranordnung (300), die Lüfterflügel (310) umfasst, wobei die Lüfteranordnung (300) dazu ausgelegt ist, durch den Elektromotor (200) angetrieben zu werden, um einen Luftstrom zu erzeugen;
eine Luftansaugöffnung (101), die als Einlass für den Luftstrom ausgelegt ist;
eine Luftausblasöffnung (102), die als Auslass für den Luftstrom ausgelegt ist; und
eine Vorrichtung zur Leitung statischer Elektrizität (900), wobei die Vorrichtung zur Leitung statischer Elektrizität (900) ein erstes Ende (910), das dazu ausgelegt ist, nahe den Lüfterflügeln (310) zu liegen, und ein zweites Ende (920) umfasst, das dazu ausgelegt ist, nahe der Luftausblasöffnung (102) zu liegen, wobei
ein Abstand zwischen dem ersten Ende (910) und den Lüfterflügeln (310) kleiner als ein Abstand zwischen dem zweiten Ende (920) und den Lüfterflügeln (310) ist, ein Abstand zwischen dem zweiten Ende (920) und der Luftausblasöffnung (102) kleiner als ein Abstand zwischen dem ersten Ende (910) und der Luftausblasöffnung (102) ist; und
im Gebrauch das erste Ende (910) statische Elektrizität an den Lüfterflügeln (310) erfasst, die statische Elektrizität zu dem zweiten Ende (920) übertragen wird und die statische Elektrizität an dem zweiten Ende (920) in den Luftstrom geblasen wird; **dadurch gekennzeichnet, dass**
die Vorrichtung zur Leitung statischer Elektrizität (900) entlang einer Umfangsrichtung der Lüfteranordnung (300) angeordnet ist;
eine Leitwand (110) in der Gehäuseanordnung (100) entlang der Umfangsrichtung der Lüfteranordnung (300) angeordnet ist; und
das erste Ende (910) und das zweite Ende (920) stets Abschnitte aufweisen, die an einer inneren Seitenfläche der Leitwand (110) angeordnet sind.

2. Luftstromvorrichtung nach Anspruch 1, wobei die Leitwand (110) lösbar an einer Innenseite der Gehäuseanordnung (100) montiert ist.

3. Luftstromvorrichtung nach Anspruch 1, wobei die Leitwand (110) als Teil der Gehäuseanordnung (100) ausgebildet ist.

4. Luftstromvorrichtung nach Anspruch 1, wobei die Vorrichtung zur Leitung statischer Elektrizität (900) an einer inneren Seitenfläche der Leitwand (110) oder an einer Außenseite der Leitwand (110) angeordnet ist.

5. Luftstromvorrichtung nach Anspruch 1, wobei die Vorrichtung zur Leitung statischer Elektrizität (900) in die Leitwand (110) eingebettet ist, das erste Ende (910) durch die Leitwand (110) hindurchtritt, um nahe den Lüfterflügeln (310) zu liegen, und das zweite Ende (920) durch die Leitwand (110) hindurchtritt, um nahe der Luftausblasöffnung (102) zu liegen.

6. Luftstromvorrichtung nach Anspruch 5, wobei die Leitwand (110) mit einer ersten Öffnung (111) versehen ist, die zu dem ersten Ende (910) passt, und das erste Ende (910) durch die erste Öffnung (111) hindurchtritt, um nahe den Lüfterflügeln (310) zu liegen.

7. Luftstromvorrichtung nach Anspruch 5, wobei die Leitwand (110) mit einer zweiten Öffnung (112) und einer dritten Öffnung (113) versehen ist, die zu dem zweiten Ende (920) passen, und das zweite Ende (920) durch die zweite Öffnung (112) und die dritte Öffnung (113) hindurchtritt und an einer Innenseite der Leitwand (110) befestigt ist, um nahe der Luftausblasöffnung (102) zu liegen.

8. Luftstromvorrichtung nach Anspruch 1, wobei die Vorrichtung zur Leitung statischer Elektrizität (900) als ein einstückig ausgebildetes Metallelement ausgeführt ist.

9. Luftstromvorrichtung nach Anspruch 1, wobei die Vorrichtung zur Leitung statischer Elektrizität (900) ferner einen Verbindungsabschnitt (930) umfasst, wobei der Verbindungsabschnitt (930) dazu ausgelegt ist, das erste Ende (910) mit dem zweiten Ende (920) zu verbinden, wobei das erste Ende (910) und das zweite Ende (920) als Metallenden ausgeführt sind und wobei der Verbindungsabschnitt (930) als leitfähiger Streifen ausgeführt ist.

10. Luftstromvorrichtung nach Anspruch 1, wobei das erste Ende (910) dazu ausgelegt ist, mindestens eine Spitze (911) zu umfassen, und ein Abstand zwischen der mindestens einen Spitze (911) und den Lüfterflügeln (310) kleiner als oder gleich 15 mm ist.

11. Luftstromvorrichtung nach Anspruch 1, wobei die Lüfteranordnung (300) mindestens einen Radiallüfter (320) umfasst.

12. Luftstromvorrichtung nach Anspruch 1, wobei den Lüfterflügeln (310), der Leitwand (110) oder der Gehäuseanordnung (100) ein antistatisches Material zugesetzt ist.

13. Luftstromvorrichtung nach Anspruch 12, wobei ein spezifischer Widerstand des antistatischen Materials kleiner als oder gleich 10⁶ Ω·m ist.

14. Luftstromvorrichtung nach Anspruch 1, wobei ein minimaler geradliniger Abstand zwischen dem ersten Ende (910) und dem zweiten Ende (920) größer als oder gleich 25 mm ist.

## Revendications

1. Dispositif de circulation d'air, comprenant :
un ensemble de boîtier (100) ;
un moteur électrique (200) disposé dans l'ensemble de boîtier (100) ;
un ensemble de ventilateur (300) comprenant des pales de ventilateur (310), dans lequel l'ensemble de ventilateur (300) est configuré pour être entraîné par le moteur électrique (200) afin de générer un flux d'air ;
un orifice d'aspiration d'air (101) configuré comme une entrée pour le flux d'air ;
un orifice de soufflage d'air (102) configuré comme une sortie pour le flux d'air ; et
un dispositif de conduction électrostatique (900), dans lequel le dispositif de conduction électrostatique (900) comprend une première extrémité (910) configurée pour être proche des pales de ventilateur (310) et une seconde extrémité (920) configurée pour être proche de l'orifice de soufflage d'air (102), dans lequel
une distance entre la première extrémité (910) et les pales de ventilateur (310) est inférieure à une distance entre la seconde extrémité (920) et les pales de ventilateur (310), une distance entre la seconde extrémité (920) et l'orifice de soufflage d'air (102) est inférieure à une distance entre la première extrémité (910) et l'orifice de soufflage d'air (102) ; et
en utilisation, la première extrémité (910) capte de l'électricité statique sur les pales de ventilateur (310), l'électricité statique est transférée à la seconde extrémité (920), et l'électricité statique au niveau de la seconde extrémité (920) est soufflée dans le flux d'air ; **caractérisé en ce que**
le dispositif de conduction électrostatique (900) est disposé suivant une direction circonférentielle de l'ensemble de ventilateur (300) ;
un déflecteur (110) est disposé dans l'ensemble de boîtier (100) suivant la direction circonférentielle de l'ensemble de ventilateur (300) ; et
la première extrémité (910) et la seconde extrémité (920) comprennent toujours des parties qui sont disposées sur une surface latérale intérieure du déflecteur (110).

2. Dispositif de circulation d'air selon la revendication 1, dans lequel le déflecteur (110) est monté de manière amovible sur un côté intérieur de l'ensemble de boîtier (100).

3. Dispositif de circulation d'air selon la revendication 1, dans lequel le déflecteur (110) est configuré comme une partie de l'ensemble de boîtier (100).

4. Dispositif de circulation d'air selon la revendication 1, dans lequel le dispositif de conduction électrostatique (900) est disposé sur une surface latérale intérieure du déflecteur (110) ou sur un côté extérieur du déflecteur (110).

5. Dispositif de circulation d'air selon la revendication 1, dans lequel le dispositif de conduction électrostatique (900) est incorporé dans le déflecteur (110), la première extrémité (910) traverse le déflecteur (110) pour être proche des pales de ventilateur (310), et la seconde extrémité (920) traverse le déflecteur (110) pour être proche de l'orifice de soufflage d'air (102).

6. Dispositif de circulation d'air selon la revendication 5, dans lequel le déflecteur (110) est pourvu d'une première ouverture (111) adaptée à la première extrémité (910), et la première extrémité (910) traverse la première ouverture (111) pour être proche des pales de ventilateur (310).

7. Dispositif de circulation d'air selon la revendication 5, dans lequel le déflecteur (110) est pourvu d'une deuxième ouverture (112) et d'une troisième ouverture (113) adaptées à la seconde extrémité (920), et la seconde extrémité (920) traverse la deuxième ouverture (112) et la troisième ouverture (113) et est fixée sur un côté intérieur du déflecteur (110) pour être proche de l'orifice de soufflage d'air (102).

8. Dispositif de circulation d'air selon la revendication 1, dans lequel le dispositif de conduction électrostatique (900) est configuré comme un élément métallique formé d'un seul tenant.

9. Dispositif de circulation d'air selon la revendication 1, dans lequel le dispositif de conduction électrostatique (900) comprend en outre une section de liaison (930), la section de liaison (930) est configurée pour relier la première extrémité (910) à la seconde extrémité (920), la première extrémité (910) et la seconde extrémité (920) sont configurées comme des extrémités métalliques, et la section de liaison (930) est configurée comme une bande conductrice.

10. Dispositif de circulation d'air selon la revendication 1, dans lequel la première extrémité (910) est configurée pour comprendre au moins une pointe (911), et une distance entre ladite au moins une pointe (911) et les pales de ventilateur (310) est inférieure ou égale à 15 mm.

11. Dispositif de circulation d'air selon la revendication 1, dans lequel l'ensemble de ventilateur (300) comprend au moins un ventilateur centrifuge (320).

12. Dispositif de circulation d'air selon la revendication 1, dans lequel un matériau antistatique est ajouté aux pales de ventilateur (310), au déflecteur (110) ou à l'ensemble de boîtier (100).

13. Dispositif de circulation d'air selon la revendication 12, dans lequel une résistivité du matériau antistatique est inférieure ou égale à 10⁶ Ω·m.

14. Dispositif de circulation d'air selon la revendication 1, dans lequel une distance linéaire minimale entre la première extrémité (910) et la seconde extrémité (920) est supérieure ou égale à 25 mm.
